# EUROPÄISCHE PATENTANMELDUNG

(11) **EP 3 888 449 A1**
(43) Veröffentlichungstag der Anmeldung: **06.10.2021**
(21) Anmeldenummer: 20166683.1
(22) Anmeldetag: 30.03.2020
(51) Int. Cl.: A01G 9/16, F21S 6/00

(54) **BEHÄLTER FÜR EINE HERMETOSPHÄRE**

(71) Anmelder: Lakatos, Christian, 1090 Wien (AT)
(72) Erfinder: Lakatos, Christian, 1090 Wien (AT)
(74) Vertreter: Weiser & Voith Patentanwälte Partnerschaft

(57) **Zusammenfassung**

Die Erfindung betrifft einen Behälter (4) für eine Hermetosphäre (1), mit einem gegenüber seiner Umgebung (6) luftdicht verschließbaren oder verschlossenen Innenraum (5), einem Boden (7) zur Abstützung eines Pflanzsubstrats (12) und zumindest einem transparenten Bereich (9), wobei der Boden (7) in Form einer Schale (45) ausgebildet ist, in welcher auf einer ersten Höhe (H₁) über der tiefsten Stelle (46) der Schale (45) ein gelochter erster Einsatz (47) und auf einer zweiten Höhe (H₂) darüber ein durchbrochener zweiter Einsatz (48) angeordnet ist.

## Beschreibung

Die vorliegende Erfindung betrifft einen Behälter für eine Hermetosphäre, mit einem gegenüber seiner Umgebung luftdicht verschließbaren oder verschlossenen Innenraum, einem Boden zur Abstützung eines Pflanzsubstrats und zumindest einem transparenten Bereich.

Hermetosphären sind komplett geschlossene Ökosysteme in einem zumindest bereichsweise lichtdurchlässigen Behälter, z.B. einer Flasche oder einer Glaskugel, insbesondere für eine Pflanzengemeinschaft. Das Ökosystem der Hermetosphäre umfasst zumindest ein Substrat, darauf angesiedelte Pflanzen und Mikroorganismen, Luft und Wasser. Hermetosphären können öffenbar sein, beispielsweise zur Wartung und Reinigung einmal im Jahr, oder dauerhaft luftdicht verschlossen sein ("echte" Hermetosphären) .

Hermetosphären sind nicht nur über lange Zeit praktisch wartungsfrei, sondern eignen sich aufgrund ihrer Abgeschlossenheit auch für den Einsatz in Krankenhäusern, Operationssälen, Reinsträumen in der Fertigung oder Wohnbereichen für Allergiker, allgemein überall dort, wo eine Kontamination der Umgebung durch Bestandteile, Pollen oder Mikroorganismen eines Ökosystems vermieden werden soll. Die Hermetosphäre wird in der Regel vom Hersteller bzw. Gärtner oder Floristen bepflanzt, verschlossen und nach kurzer Beobachtungsphase auf Lebensfähigkeit des Pflanzenhabitats an den Konsumenten ausgeliefert. Beim Transport und Vertrieb der Hermetosphäre ist dabei tunlichst darauf zu achten, dass die Hermetosphäre nicht versehentlich verkippt oder umgedreht wird, wodurch das Pflanzsubstrat und die Pflanzen sich lockern und im Behälter herumfallen könnten, was das Ökosystem zerstört.

Die Erfindung setzt sich zum Ziel, einen Behälter für eine Hermetosphäre zu schaffen, welcher einen einfachen und sicheren Transport der damit aufgebauten Hermetosphäre ermöglicht.

Dieses Ziel wird mit einem Behälter der einleitend genannten Art erreicht, der sich gemäß der Erfindung dadurch auszeichnet, dass der Boden in Form einer Schale ausgebildet ist, in welcher auf einer ersten Höhe über der tiefsten Stelle der Schale ein gelochter erster Einsatz und auf einer zweiten Höhe darüber ein durchbrochener zweiter Einsatz angeordnet ist.

Auf diese Weise wird ein zweifaches Rückhaltesystem für ein zweischichtiges Pflanzsubstrat im Inneren des Behälters geschaffen. Das Rückhaltesystem hält das Pflanzsubstrat und damit die Pflanzen auch bei einem versehentlichen Verkippen oder Umdrehen des Behälters sicher fest. Aufgrund der beiden Einsätze ist eine Vermischung der zwei Substratschichten verhindert. Die Hermetosphäre übersteht damit auch eine raue Behandlung beim Transport, z.B. Postversand. Die Hermetosphäre kann so sicher zu ihrem Einsatzort, beispielsweise einem Krankenhauszimmer oder der Wohnung eines Allergikers, versandt werden.

Besonders vorteilhaft ist es, wenn über dem zweiten Einsatz eine Schicht aus einem Geotextil angeordnet ist, bevorzugt einem saugfähigen Vlies. Die Schicht dient einerseits als zusätzlicher Rückhalt für das Pflanzsubstrat. Anderseits verteilt die Schicht das im Behälterinneren entstehende Kondenswasser, das von der Decke oder einer Kondensiereinrichtung (wie später ausführlicher beschrieben) herabtropft oder an den Innenseiten des Behälters herabfließt, aufgrund ihrer Kapillarwirkung in Horizontalrichtung quer über das Pflanzsubstrat, sodass sie dieses von oben her gleichmäßig benetzt.

Die Schicht kann beispielsweise mit Abstand über dem zweiten Einsatz zwischen den Innenwänden des Behälters gespannt sein. Bevorzugt ist die Schicht vom zweiten Einsatz getragen, sodass sie einen zusätzlichen mechanischen Rückhalt für das Pflanzsubstrat bildet.

Besonders günstig ist es, wenn die lichte Weite der Löcher des ersten Einsatzes kleiner als die lichte Weite der Durchbrechungen des zweiten Einsatzes ist, und insbesondere wenn die lichte Weite der Löcher des ersten Einsatzes 1 - 10 mm, bevorzugt 3 - 4 mm, beträgt. Der erste Einsatz bildet so einen Rückhalt für ein grobes granulares Substrat darunter, z.B. ein Lavagranulat oder Blähtonkügelchen, und der zweite Einsatz einen Rückhalt für ein über die großen Durchbrechungen gut bepflanzbares und durch den Bewuchs "zusammenbackendes" Substrat wie Blumenerde.

Fertigungstechnisch besonders einfach ist es, wenn der erste Einsatz ein Lochblech und/oder der zweite Einsatz ein Speichenring ist.

Die Montagehöhen der beiden Einsätze können auf besonders einfache Weise dadurch festgelegt werden, dass die Schale nach oben hin trichterförmig erweitert ist, wobei der Außenumfang des ersten Einsatzes an den Innenumfang der Schale auf der ersten Höhe und der Außenumfang des zweiten Einsatzes an den Innenumfang der Schale auf der zweiten Höhe angepasst ist. Die Einsätze brauchen einfach in die Schale eingelegt zu werden und sind aufgrund ihrer unterschiedlichen Größen automatisch voneinander beabstandet.

Die Einsätze können am Innenumfang der Schale durch Verkleben, Verschweißen, Verrasten entsprechender Schnappverbindungen od.dgl. verankert sein. In einer besonders vorteilhaften Ausführungsform der Erfindung weist die Schale eine zentral nach oben hochragende Spindel auf, auch welche der erste und der zweite Einsatz aufgefädelt sind. Die Einsätze können so beispielsweise mittels einer auf die Spindel aufgezogenen Mutter fixiert werden, und die Höhen der Einsätze können durch optionale Stufen oder Absätze auf der Spindel festgelegt werden, insbesondere wenn die Schale z.B. zylinderförmig ist.

Der Behälter der Erfindung kann bereits teilweise für den Aufbau der Hermetosphäre vorkonfektioniert werden, indem in der Schale unterhalb des ersten Einsatzes ein anorganisches Substrat, bevorzugt Lavagranulat, und/oder zwischen dem ersten und zweiten Einsatz ein organisches Substrat, bevorzugt Blumenerde, angeordnet ist. Optional kann bei Verwendung einer Schicht aus Geotextil oder Vlies diese gleich mit einem Moos bewachsen sein.

Der Behälter kann einstückig oder mehrteilig sein, letzteres beispielsweise wenn der Boden als Kunststoffsschale und der restliche Behälter aus Glas gebildet ist. Besonders bevorzugt weist der Behälter einen vom Boden zur Decke des Behälters hochragenden transparenten Mantel auf, insbesondere aus Glas, sodass Tageslicht von allen Seiten in den Behälter einfallen kann und die Sicht auf die Pflanzen von allen Seiten möglich ist.

Die Schale kann dabei auf beliebige Weise mit dem Mantel luftdicht verbunden werden, beispielsweise durch Verschweißen, Verschrauben oder Zusammenstecken, wobei gegebenenfalls auch Dichtungsringe zwischengelegt werden können. Bevorzugt ist die Schale mit dem Mantel verklebt, was eine einfache Fertigung und dauerhafte Dichtheit an dieser Schnittstelle ermöglicht.

Die Decke des Behälters kann einstückig mit dem Mantel ausgebildet sein, beispielsweise wenn dieser den oberen Teil einer Glasflasche oder Glaskugel bildet. Bevorzugt ist die Decke des Behälters durch eine Kappe gebildet, welche eine obere Öffnung des Behälters luftdicht verschließt. Eine solche Kappe kann insbesondere für die Montage weiterer Einbauten verwendet werden, z.B. einer Beleuchtungsvorrichtung oder einer Kondensiervorrichtung für im Behälter eingeschlossenen Wasserdampf, wie später noch ausführlicher erläutert.

Die Erfindung wird nachstehend anhand von in den beigeschlossenen Zeichnungen dargestellten Ausführungsbeispielen näher erläutert. In den Zeichnungen zeigt:
Fig. 1 eine mit dem Behälter der Erfindung aufgebaute Hermetosphäre in vertikalem Schnitt;
Fig. 2 das Detail A von Fig. 1 vergrößert;
Fig. 3 die Pyramide des Behälters der Erfindung in einer Perspektivansicht von unten;
Fig. 4 das Detail B von Fig. 1 vergrößert; und
Fig. 5 den zweiten Einsatz des Behälters der Erfindung in einer Draufsicht.

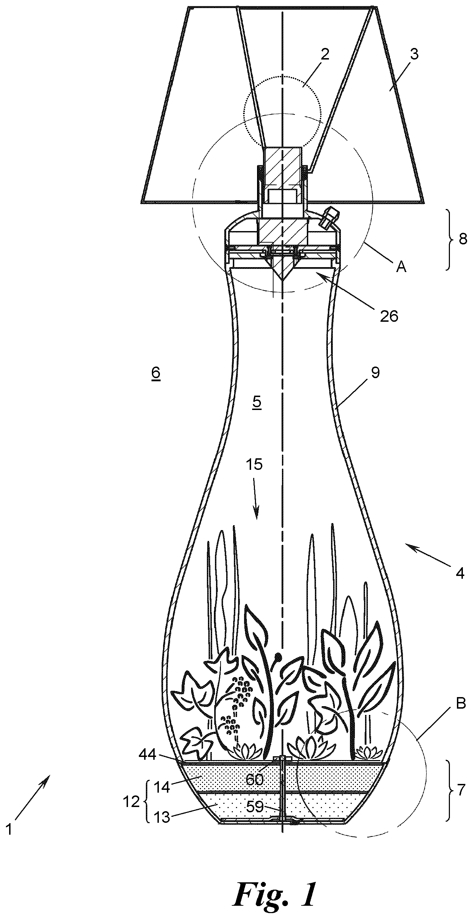

In den Fig. 1, 2 und 4 ist eine Hermetosphäre 1 dargestellt, die im gezeigten Beispiel den Lampenfuß einer Tisch- oder Stehlampe mit einer Leuchte 2 und einem Lampenschirm 3 bildet. Dies ist nicht zwingend; die Hermetosphäre 1 kann auch für sich als Pflanzenhabitat ohne aufgesetzte Leuchte bzw. Lampe stehen.

Die Hermetosphäre 1 umfasst einen Behälter 4 mit einem Innenraum 5, der gegenüber der Umgebung 6 luftdicht verschließbar oder verschlossen ist. Der Behälter 4 hat einen Boden 7 und eine Decke 8, die über einen vom Boden 7 zur Decke 8 hochragenden Mantel 9 verbunden sind. Der Mantel 9 kann mit dem Boden 7 und/oder der Decke 8 einstückig oder mehrteilig ausgeführt sein.

Zumindest ein Bereich des Behälters 4, insbesondere der Mantel 9 oder ein Teil desselben, ist für den Einfall von Umgebungslicht und für die Sicht auf den Innenraum 5 transparent, z.B. aus durchsichtigem Kunststoff oder Glas. Im gezeigten Beispiel ist der gesamte Mantel 9 aus durchsichtigem Glas gefertigt, während der Boden 7 und die Decke 8 aus Kunststoff oder Metall gefertigt sind. Ein Teil des Behälters 4, insbesondere die Decke 8 zumindest teilweise, ist aus einem wärmeleitenden Material, z.B. Metall, gefertigt, wie später noch ausführlicher erörtert.

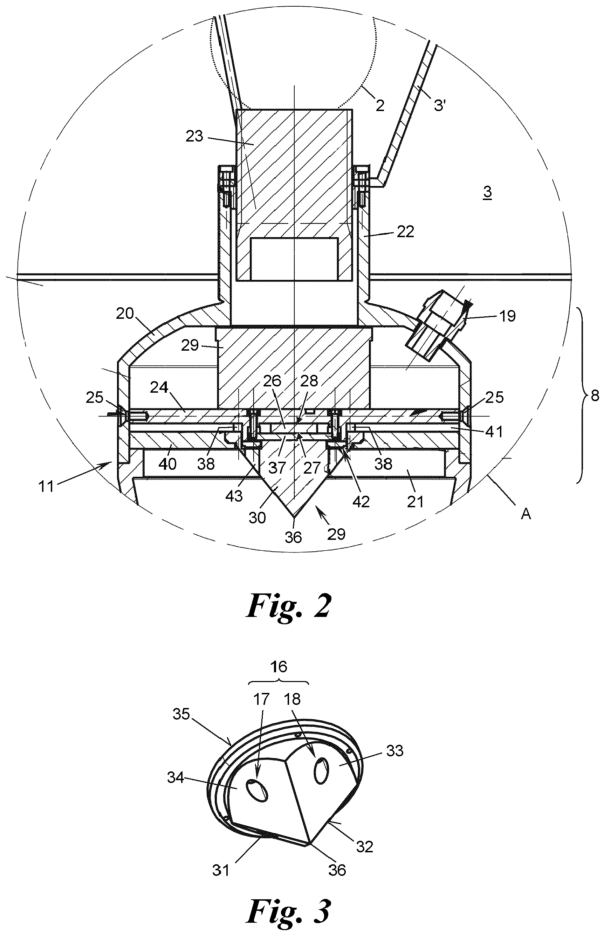

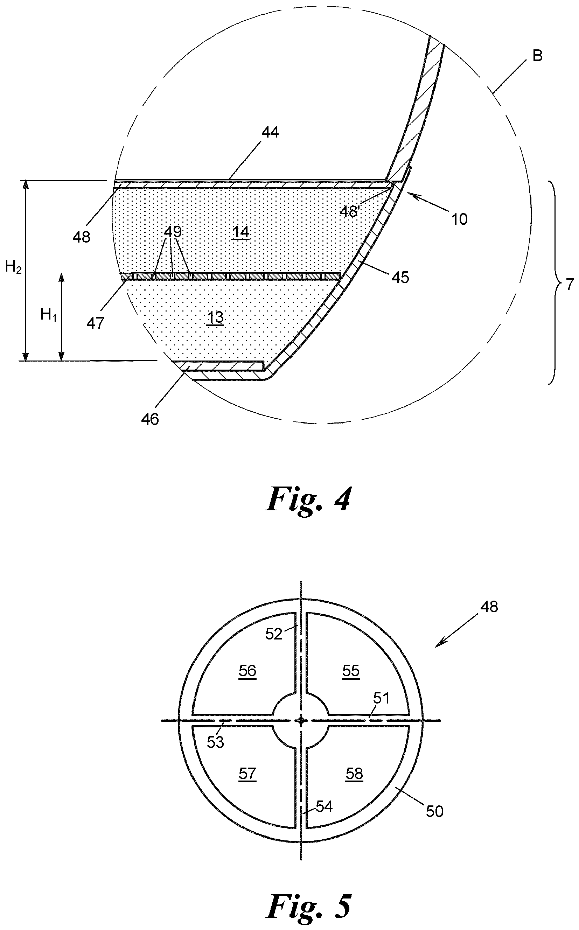

Im Fall einer mehrteiligen Ausführung des Behälters 4, wie hier aus Boden 7, Decke 8 und Mantel 9, sind die einzelnen Teile an ihren Verbindungsstellen luftdicht miteinander verbunden, z.B. verklebt, verschweißt oder - gegebenenfalls unter Zwischenlegung von Dichtungsringen - gesteckt oder verschraubt. Im gezeigten Beispiel ist der Boden 7 mit dem Mantel 9 an einem umlaufenden, halbüberlappenden Stoß 10 verklebt (Fig. 4), und der Mantel 9 mit der Decke 8 an einem umlaufenden, halbüberlappenden Stoß 11 (Fig. 2).

Die Hermetosphäre 1 umfasst ferner ein auf dem Boden 7 des Behälters 4 abgestütztes Pflanzsubstrat 12, beispielsweise aus einer unteren Schicht aus einem anorganischen Substrat 13 und einer oberen Schicht aus einem organischen Substrat 14. Das anorganische Substrat 13 kann beispielsweise Lavagranulat, Blähton od.dgl. sein, das organische Substrat 14 eine Blumenerde oder Blumenerdemischung wie Kokohum®. Auch ein einschichtiger oder mehr als zweischichtiger Aufbau des Pflanzsubstrats 12 ist möglich.

Das Pflanzsubstrat 12 wird mit Pflanzen 15 bepflanzt und bewässert und dann wird der Behälter 4 (öffenbar oder dauerhaft) unter Einschließung von Luft im Innenraum 5 verschlossen. Dabei kann das Pflanzsubstrat 12 zusätzlich mit ausgewählten Nährstoffen, Mikroorganismen, Pilzen usw. gedüngt bzw. geimpft werden, um die Besiedlung des Habitats im Inneren des Behälters 4 für die Ausbildung der Hermetosphäre 1 zu vervollständigen.

Die Pflanzen 15 werden in der Regel durch das über die transparenten Bereiche des Behälters 4, hier den Glasmantel 9, einfallende Tages- bzw. Umgebungslicht mit Energie versorgt. Anstelle oder zusätzlich zu Tages- bzw. Umgebungslicht kann auch das Licht der Leuchte 2 dazu verwendet werden, falls vorhanden. Optional kann ferner die Decke 8 mit einer zum Innenraum 5 hin gerichteten Beleuchtungsvorrichtung 16 ausgestattet sein, beispielsweise einem Kranz von LEDs 17, 18, wie später noch ausführlicher erläutert. Die Beleuchtungsvorrichtung 16 und/oder die Leuchte 2 können beispielsweise über ein Stromversorgungskabel (nicht gezeigt) mit Netzstrom versorgt werden, welches durch eine Kabeltülle 19 der Decke 8 hindurchgeführt ist.

Das in der Hermetosphäre 1 eingeschlossene Wasser führt in der Regel zu einer gesättigten Luftfeuchtigkeit im Innenraum 5. Um eine Kondensation von Wasserdampf an den Innenwänden des Behälters 4, insbesondere der Innenoberfläche des Glasmantels 9, zu vermeiden, dient die folgende Konstruktion, die in den Fig. 2 und 3 im Detail gezeigt ist.

Fig. 2 zeigt den Bereich der Decke 8 des Behälters 4 im Schnitt. Die Decke 8 ist hier durch eine Kappe 20 aus wärmeleitendem Material, z.B. Aluminium, gebildet, welche eine obere Öffnung 21 des Behälters 4 luftdicht verschließt. Die Kappe 20 hat an ihrer Oberseite einen Stutzen 22 zur Lagerung einer Fassung 23 für die Leuchte 2 und eines Gestänges 3' zur Halterung des Lampenschirms 3. Wenn keine Leuchte 2 vorgesehen ist, entfällt der Stutzen 22 und die Kappe 20 ist an ihrer Oberseite einfach geschlossen.

Auf ihrer zum Innenraum 5 hin weisenden Seite ist die Kappe 20 mit einer ersten Platte 24 aus wärmeleitendem Material, z.B. Aluminium, versehen. Die Platte 24 ist z.B. einstückig aus der Kappe 20 ausgeformt oder wie gezeigt ein gesonderter Bauteil, der mittels Schrauben 25 in der Kappe 20 verankert und so mit dieser wärmeleitend verbunden ist.

Auf ihrer dem Innenraum 5 zugewandten Seite trägt die Platte 24 ein Peltier-Element 26. Ein solches Peltier-Element ist, wie in der Technik bekannt, ein elektrothermische Wandler, der basierend auf dem Peltier-Effekt bei Stromdurchfluss eine Temperaturdifferenz zwischen seiner einen Seite 27 und seiner anderen Seite 28 erzeugt. Das Peltier-Element 26 wird über ein Elektronikmodul 29 z.B. von dem durch die Tülle 19 zugeführten Stromversorgungskabel so mit Strom versorgt, dass die dem Innenraum 5 zugewandte Seite 27 kälter ist als die dem Innenraum 5 ab- und der ersten Platte 24 zugewandte Seite 28. Die Seite 27 wird daher im weiteren als "kalte" Seite des Peltier-Elements 26 und die Seite 28 als "heiße" Seite des Peltier-Elements 26 bezeichnet.

Die dem Innenraum 5 zugewandte kalte Seite 27 des Peltier-Elements 26 ist in der Regel kälter als die restliche Innenoberfläche des Behälters 4, insbesondere des Glasmantels 9. Der Wasserdampf im Innenraum 5 kondensiert daher vornehmlich nur an der kalten Seite 27 des Peltier-Elements 26 und tropft von dort auf die Pflanzen 15, das Pflanzsubstrat 12 und den Boden 7 herab.

Um die Tropfenbildung des sich auf der kalten Seite 27 bildenden Kondensatfilms zu begünstigen, ist die kalte Seite 27 mit zumindest einer Abtropfnase 29 ausgestattet, welche dem Innenraum 5 zugewandt ist. Die Abtropfnase/n 29 kann/können durch beliebige geometrische Körper gebildet sein, die eine oder mehrere zum Innenraum 5 hin weisende Spitzen, Grate, Kanten od.dgl. bilden, beispielsweise durch eine oder mehrere Kühlrippen.

Im gezeigten Beispiel ist die Abtropfnase 29 eine einzige Pyramide 30 mit vier Pyramidenseiten 31 - 34 und einer rechteckigen Basis 35. Der Scheitel 36 der Pyramide 30 stellt eine ausgeprägte Spitze 36 zur Tropfenbildung dar. Anstelle durch eine solche vierseitige Pyramide 30 könnte die Abtropfnase 29 auch durch eine Pyramide mit einer anderen polygonalen Basis oder durch einen Kegel gebildet sein. Die vierseitige Pyramide 30 mit rechteckiger Basis 35 hat den Vorteil, dass ihre Basis 35 optimal an ein rechteckiges Peltier-Element 26 angepasst werden kann und ihre Pyramidenseiten 31 - 34 unter den gegebenen Rahmenbedingungen die größtmögliche Kondensationsoberfläche darbieten.

Die kalte Seite 27 des Peltier-Elements 26 ist entweder direkt zu der (zumindest einen) Abtropfnase 29 ausgebildet oder die (zumindest eine) Abtropfnase 29 ist als gesonderter Bauteil, wie die Pyramide 30, wärmeleitend mit der kalten Seite 27 des Peltier-Elements 26 verbunden.

Im gezeigten Beispiel ist zur vereinfachten Montage des Peltier-Elements 26 optional eine zweite Platte 37 aus wärmeleitendem Material zwischen das Peltier-Element 26 und die Pyramide 30 in wärmeleitender Verbindung mit beiden zwischengelegt. Die Platte 37 ist unter Zwischenlegung wärmeisolierender Abstandhalter 38 mit der Platte 24 verschraubt. Das Peltier-Element 26 kann so zwischen den Platten 24, 37 eingeklemmt vormontiert und an das Elektronikmodul 29 eingeschlossen werden, und dann kann die Pyramide 30 z.B. mittels Schrauben auf die Platte 37 geschraubt werden. Die Platte 37 kann aber auch ein Teil des Peltier-Elements 26 oder ein Teil der Pyramide 30 sein oder überhaupt entfallen. Im gezeigten Beispiel bildet die Platte 37 mitsamt der Pyramide 30 die Abtropfnase 29 der kalten Seite 27 des Peltier-Elements 26.

Das Peltier-Element 26 kühlt die Pyramide 30 zwecks Kondensation des Wasserdampfes im Innenraum 5 an den Pyramidenseiten 31 - 34 und Tropfenbildung am Pyramidenscheitel 36. Die von der heißen Seite 27 des Peltier-Elements 26 erzeugte Wärme wird dabei über die Platte 24 und die Kappe 20 an die Umgebung 6 abgegeben. Um eine parasitäre Einstrahlung von Wärme auf die Pyramide 30 zu vermeiden, kann rund um die kalte Seite 27 bzw. die Pyramide 30 eine Wärmeisolierung 40, z.B. eine Kunststoffplatte, angebracht sein. Die Kunststoffplatte 40 liegt optional zusätzlich in einem Isolationsabstand 41 zur Platte 24.

Die Beleuchtungsvorrichtung 16 kann an beliebiger Stelle in die Kappe 20 eingebaut sein, beispielsweise in die Kunststoffplatte 40. Im gezeigten Beispiel sind die LEDs 17, 18 der Beleuchtungsvorrichtung 16 direkt in die Pyramidenseiten 31 - 34 eingebettet. Dazu ist ein mit SMD-LEDs (Surface Mounted Device LEDs) ausgestatteter Ring 42 in eine Ringnut der Basis 35 der Pyramide 30 eingelegt, und die Pyramidenseiten 31 - 34 haben auf die SMD-LEDs des Rings 42 ausgerichtete Bohrungen, in denen Lichtwellenleiter 43 aus transparentem Kunststoff bündig eingesetzt sind.

Der SMD-LED-Ring 42 wird über Verbindungsleitungen (nicht gezeigt) vom Elektronikmodul 29 gespeist und gesteuert. Das Elektronikmodul 29 kann z.B. in einem hinter der Platte 24 liegenden Hohlraum der Kappe 20 aufgenommen sein, wie gezeigt, oder außerhalb des Behälters 4 liegen und über das durch die Tülle 19 hindurchgeführte Kabel angeschlossen sein.

Das Elektronikmodul 29 kann mit entsprechenden Sensoren im Behälter 4 zum Messen der Temperatur, Luftfeuchtigkeit und/oder Lichtintensität im Innenraum 5 interagieren und abhängig von deren Messwerten das Peltier-Element 26, die Beleuchtungsvorrichtung 16 und/oder die Leuchte 2 steuern, z.B. um einen Tages-/Nachtrhythmus und einen ausgewählten Temperatur- und Luftfeuchtigkeitsbereich in der Hermetosphäre 1 zu errichten.

Es versteht sich, dass das Peltier-Element 26 auch an einer anderen Stelle im Behälter 4 oberhalb des Bodens 7 angeordnet sein kann, z.B. an einer Seitenwand des Behälters 4, an dem Glasmantel 9 oder an einer mit dem Glasmantel 9 einstückig ausgeformten Glasdecke 8 des Behälters 4, insbesondere wenn dieser in Form einer Glaskugel, eines Glaszylinders usw. ausgebildet ist.

Um zu vermeiden, dass die von der Abtropfnase 29 herabtropfenden Kondensattropfen nur einen Teil des Pflanzsubstrats 12 bewässern und Pflanzen 15 in trockeneren Bereichen des Pflanzsubstrats 12 absterben, ist ein Mittel zum Verteilen der herabfallenden Tropfen über den gesamten Boden 7 bzw. das gesamte Pflanzsubstrat 12 vorgesehen. Das Verteilmittel kann z.B. ein Gitter, Prallblech od.dgl. sein, das zwischen der Abtropfnase 29 und dem Pflanzsubstrat 12 liegt, beispielsweise von einer an der Behälterinnenwand, dem Boden 7 oder dem Pflanzsubstrat montierten Tragstruktur gehalten. Im gezeigten Beispiel ist das Verteilmittel eine Schicht 44 aus einem Geotextil, z.B. einem feinmaschigen Gewebe oder Gewirke oder insbesondere einem saugfähigen Vlies wie Hygrolon®. Ein solches Geotextil bzw. Vlies verteilt die herabfallenden Kondensattropfen durch seine Kapillarwirkung in horizontaler Richtung rasch flächig über die gesamte Oberseite des Pflanzsubstrat 12 und benetzt dieses von oben her gleichmäßig.

Die Schicht 44 kann direkt auf das Pflanzsubstrat 12 aufgelegt oder mit Abstand darüber zwischen den Innenwänden des Behälters 4 gespannt sein, beispielsweise durch umlaufende Verklebung mit der Innenseite des Glasmantels 9. Eine weitere Möglichkeit zur Abstützung der Schicht 44 ist in den Fig. 4 und 5 dargestellt.

In der Fig. 4 und 5 ist eine spezielle Rückhaltekonstruktion für das Pflanzsubstrat 12 gezeigt, sodass dieses nicht im Behälter 4 lose herumfällt, wenn der Behälter 4 versehentlich ver- oder umgekippt wird.

Zu diesem Zweck ist der Boden 7 in Form einer Schale 45 ausgebildet, in welcher auf einer ersten Höhe H₁ über der tiefsten Stelle 46 der Schale 45 ein erster Einsatz 47 und auf einer zweiten Höhe H₂ darüber ein zweiter Einsatz 48 angeordnet sind. Unterhalb des ersten Einsatzes 47 liegt das anorganische Substrat 13, und zwischen dem ersten Einsatz 47 und dem zweiten Einsatz 48 liegt das organische Substrat 14. Über oder direkt unter dem zweiten Einsatz 48 liegt die Schicht 44.

Die Schicht 44, z.B. das saugfähige Vlies, ist beispielsweise auf den zweiten Einsatz 48 aufgelegt, aufgeklebt oder aufgespannt, indem sie um den Rand 47' des Einsatzes 48 herumgeschlagen und zwischen dem Rand 47' und der Innenseite der Schale 45 bzw. des Mantels 9 eingeklemmt ist.

Der erste Einsatz 47 ist eine gelochte Scheibe, beispielsweise ein Lochblech. Die lichte Weite der Löcher 49 des Einsatzes 47 beträgt beispielsweise 1 bis 10 mm, insbesondere 3 bis 4 mm, um anorganisches Substrat 13 in Form von z.B. Lavagranulat oder Blähtonkügelchen zurückzuhalten. Der zweite Einsatz 48 ist eine vielfach durchbrochene Scheibe, z.B. ein Speichenring 50 mit Speichen 51 - 54 und dazwischenliegenden großen Durchbrechungen 55 - 58. Die lichte Weite der Durchbrechungen 55 - 58 ist wesentlich größer als die lichte Weite der Löcher 49 des ersten Einsatzes 47.

Die über oder unter dem Einsatz 48 liegende Schicht 44 hält in Verbindung mit den Speichen 51 - 54 das organische Substrat 14 zurück. Zum Bepflanzen des Pflanzsubstrats 12 können beispielsweise kleine Schnitte in die Schicht 44 gemacht und über diese die Pflanzen 15 in das Pflanzsubstrat 12 eingepflanzt werden.

Die Einsätze 47, 48 können am Innenumfang der Schale 45 durch Verkleben, Verschweißen, Verrasten entsprechender Schnappverbindungen od.dgl. verankert sein. In der gezeigten Ausführungsform hat die Schale 45 eine zentrale, nach oben hochragende Spindel 59, auf welche die Einsätze 47, 48 über entsprechende zentrale Öffnungen darin aufgefädelt sind. Der zweite Einsatz 48 kann mit einer auf die Spindel 49 aufgezogenen Mutter 60 fixiert werden, optional auch der erste Einsatz 47. Stufen oder Absätze (nicht gezeigt) auf der Spindel 59 können dabei die Höhen H₁, H₂ der Einsätze 47, 48 festlegen.

Die Höhen H₁ und H₂ der Einsätze 47 und 48 können auch dadurch festgelegt sein, dass sich die Schale 45 trichterförmig nach oben erweitert und der Außenumfang des Einsatzes 47 an den Innenumfang der Schale 45 auf der Höhe H₁ und der Außenumfang des Einsatzes 48 an den Innenumfang der Schale 45 auf der Höhe H₂ angepasst ist. Nach Einfüllen des Substrats 13 bis zur Höhe H₁ wird der Einsatz 47 unter Auffädeln auf die Spindel 49 auf das Substrat 13 aufgelegt, dann wird das Substrat 14 eingefüllt, und schließlich wird der Einsatz 48 unter Auffädeln auf die Spindel 49 auf das Substrat 14 aufgelegt und mit der Mutter 60 fixiert.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Behälter für eine Hermetosphäre (1), mit einem gegenüber seiner Umgebung (6) luftdicht verschließbaren oder verschlossenen Innenraum (5), einem Boden (7) zur Abstützung eines Pflanzsubstrats (12) und zumindest einem transparenten Bereich (9), **dadurch gekennzeichnet, dass** der Boden (7) in Form einer Schale (45) ausgebildet ist, in welcher auf einer ersten Höhe (H₁) über der tiefsten Stelle (46) der Schale (45) ein gelochter erster Einsatz (47) und auf einer zweiten Höhe (H₂) darüber ein durchbrochener zweiter Einsatz (48) angeordnet ist.

2. Behälter nach Anspruch 1, **dadurch gekennzeichnet, dass** über dem zweiten Einsatz (48) eine Schicht (44) aus einem Geotextil angeordnet ist, bevorzugt einem saugfähigen Vlies.

3. Behälter nach Anspruch 2, **dadurch gekennzeichnet, dass** die Schicht (44) vom zweiten Einsatz (48) getragen ist.

4. Behälter nach einem der Ansprüche 1 bis 3, **dadurch gekennzeichnet, dass** die lichte Weite der Löcher (49) des ersten Einsatzes (47) kleiner als die lichte Weite der Durchbrechungen (55 - 58) des zweiten Einsatzes (48) ist.

5. Behälter nach einem der Ansprüche 1 bis 4, **dadurch gekennzeichnet, dass** die lichte Weite der Löcher (49) des ersten Einsatzes 1 - 10 mm, bevorzugt 3 - 4 mm, beträgt.

6. Behälter nach einem der Ansprüche 1 bis 5, **dadurch gekennzeichnet, dass** der erste Einsatz (47) ein Lochblech ist.

7. Behälter nach einem der Ansprüche 1 bis 6, **dadurch gekennzeichnet, dass** der zweite Einsatz (48) ein Speichenring ist.

8. Behälter nach einem der Ansprüche 1 bis 7, **dadurch gekennzeichnet, dass** die Schale (45) nach oben hin trichterförmig erweitert ist, wobei der Außenumfang des ersten Einsatzes (47) an den Innenumfang der Schale (45) auf der ersten Höhe (H₁) und der Außenumfang des zweiten Einsatzes (48) an den Innenumfang der Schale (45) auf der zweiten Höhe (H₂) angepasst ist.

9. Behälter nach einem der Ansprüche 1 bis 8, **dadurch gekennzeichnet, dass** die Schale (45) eine zentral nach oben hochragende Spindel (59) aufweist, auch welche der erste und der zweite Einsatz (47, 48) aufgefädelt sind.

10. Behälter nach einem der Ansprüche 1 bis 9, **dadurch gekennzeichnet, dass** in der Schale (45) unterhalb des ersten Einsatzes (47) ein anorganisches Substrat (13), bevorzugt Lavagranulat, angeordnet ist.

11. Behälter nach einem der Ansprüche 1 bis 10, **dadurch gekennzeichnet, dass** in der Schale (45) zwischen dem ersten und zweiten Einsatz (47, 48) ein organisches Substrat (14), bevorzugt Blumenerde, angeordnet ist.

12. Behälter nach einem der Ansprüche 1 bis 11 jeweils in Verbindung mit Anspruch 2, **dadurch gekennzeichnet, dass** die Schicht (44) mit einem Moos bewachsen ist.

13. Behälter nach einem der Ansprüche 1 bis 12, **dadurch gekennzeichnet, dass** der Behälter (4) einen vom Boden (7) zur Decke (8) des Behälters (4) hochragenden transparenten Mantel (9), bevorzugt aus Glas, aufweist.

14. Behälter nach Anspruch 13, **dadurch gekennzeichnet, dass** die Schale (45) mit dem Mantel (9) verklebt ist.

15. Behälter nach einem der Ansprüche 1 bis 14, **dadurch gekennzeichnet, dass** die Decke (8) des Behälters (4) durch eine Kappe (20) gebildet ist, welche eine obere Öffnung (21) des Behälters (4) luftdicht verschließt.
